# EUROPEAN PATENT APPLICATION

(11) **EP 4 530 893 A1**
(43) Date of publication of application: **02.04.2025**
(21) Application number: 23465543.9
(22) Date of filing: 26.09.2023
(51) Int. Cl.: G06F 21/10, G06F 8/71, G06Q 50/18

(54) **METHOD AND SYSTEM FOR SOFTWARE LICENSING AUDIT**

(71) Applicant: Siemens Aktiengesellschaft, 80333 München (DE)
(72) Inventor: CRIHANA, David, 500372 Brasov, Brasov (RO); HUSLEAG, Alexandru, 500170 Brasov, Brasov (RO)
(74) Representative: Fierascu, Cosmina-Catrinel

(57) **Abstract**

A method of software licensing audit, a system, and a computer program are disclosed. The method includes: receiving a clearance report for a software package and a first list of licenses associated with the clearance report, each license comprising a first license file path and a first license text; receiving a new version of the software package; determining a second list of licenses by scanning the new version of the software package, each license comprising a second license file path and a second license text; determining, for each license in the second list, whether the first list of licences contains a license having the first license file path and the first license text identical to the second license file path and the second license text; setting an audit status for the new version of the software package, based on a result of the determination.

## Description

The invention relates to methods and systems for software licensing audit, specifically in case of software update or upgrade.

Whenever a new software library or a new version of library is used in a software application, a software developer needs to ensure that the licenses inside the software library are accepted by the organization.

The license reports are generated by a variety of known software tools. These tools create a list of all licenses from the dependencies inside the software project or package. The software project typically includes an application or a component and associated software libraries. In large organizations, whenever there is an update or new version for a software library, the developer needs to first get a clearance report for that version before it can be used. To obtain the clearance report, the developer submits a clearance request with the license report. The clearance report is generated after verifying whether the new licenses comply with the regulations of the organization. Such manual verification is a manual work and may a long time (even several days). While the updates of software libraries are quite frequent, the licenses in software libraries are not changed so often. Therefore a need exists to simplify the software licensing audit in case of software update, when the licenses are not changing.

The aim of the present invention is to provide a method and system for software licensing audit, such that the manual verification of license compliance is not needed when the licenses inside the software project or package are not changed since the previous licensing audit.

According to a first aspect of the present invention there is provided a method of software licensing audit, comprising:
receiving a clearance report for a software package and a first list of licenses associated with the clearance report, each license comprising a first license file path and a first license text,
receiving a new version of the software package,
determining a second list of licenses by scanning the new version of the software package, each license comprising a second license file path and a second license text,
determining, for each license in the second list, whether the first list of licences contains a license having the first license file path and the first license text identical to the second license file path and the second license text,
setting an audit status for the new version of the software package, based on a result of the determination.

The software package typically includes a software library, an application, or a bundle of libriaries and/or applications. It may be a software in a development environment, or a running software on a device, server or in the cloud environment.

The clearance report typically includes a description of the software package, a list of licenses in the software packages. It may include a name and, a signature or a digital signature and other details of a person who submitted a clearance request and/or a person who verified and approved the report.

The audit status may include an indication whether the clearance report associated with previous version of the software package can be further used with new version of the software package or not. It may also include additional information, for example a list of licenses in new version of software package which require further manual verification.

Preferably, the method further comprises notifying a user of the audit status and outputting each license out of the licenses in the second list, for which the first list of licences does not contain a license having the first license file path and the first license text identical to the second license file path and the second license text.

In a preferred embodiment, freely combinable with the previous ones, the method further comprises associating the clearance report with the second list of licenses and/or with the new version of the software package, upon determining that, for each license in the second list, the first list of licences contains a license having the first license file path and the first license text identical to the second license file path and the second license text.

In another preferred embodiment, freely combinable with the previous ones, the method further comprises shutting down an application associated with the new version of the software package, upon determining that, for at least one license in the second list, the first list of licences does not contain a license having the first license file path and the first license text identical to the second license file path and the second license text.

The software package may be associated with one or multiple software applications. If it is associated with multiple applications, the method may include shutting down all associated applications or only a subset of them, for example only those which use the licenses not included in the first list of licenses.

In a further aspect, the invention relates to a system for software licensing audit, comprising:
means for receiving a clearance report for a software package and a first list of licenses associated with the clearance report, each license comprising a first license file path and a first license text,
means for receiving a new version of the software package,
means for determining a second list of licenses by scanning the new version of the software package, each license comprising a second license file path and a second license text,
means for determining, for each license in the second list, whether the first list of licences contains a license having the first license file path and the first license text identical to the second license file path and the second license text,
means for setting an audit status for the new version of the software package, based on a result of the determination.

Preferably, the system further comprises means for notifying a user of the audit status and means for outputting each license out of the licenses in the second list, for which the first list of licences does not contain a license having the first license file path and the first license text identical to the second license file path and the second license text.

In a preferred embodiment, freely combinable with the previous ones, the system further comprises means for shutting down an application associated with the new version of the software package.

The software package may be associated with one or multiple software applications. If it is associated with multiple applications, the means for shutting down an application may shut down all applications or only a subset of them, for example only those which use the licenses not included in the first list of licenses.

In a further aspect, the invention relates to a computer program comprising instructions which, when the program is executed by a computer, cause the computer to carry out the method of any of the claims 1-4.

Further features of the present invention will be apparent from the following description of exemplary embodiments with reference to the attached drawings.
Fig. 1 is a flowchart illustrating the method of software licensing audit, according to one embodiment of the invention.
Fig. 2 is a flowchart illustrating the method of software licensing audit, according to another embodiment of the invention.
Fig. 3 is a block diagram illustrating the logical components of a system for software licensing audit according to one embodiment of the invention.
Fig. 4 is a block diagram illustrating the logical components of a system for software licensing audit according to another embodiment of the invention.
Fig. 5 is a block diagram illustrating the hardware components of a computer being part of the system according to one embodiment of the invention.

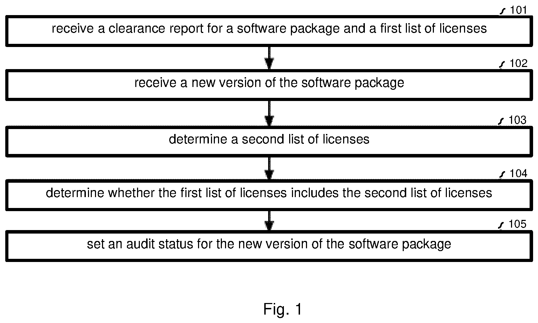

As presented in Fig. 1, a method of software licensing audit starts with step 101, where a clearance report for a software package and a first list of licenses is received. It may be received via a network interface or read from a file stored in the computer storage. Each license in the first list includes a first license file path and a first license text. The license text may indicate a type of license and/or rights, permissions, requirements, and other important information related to using, distributing, selling, modifying and any other actions related to the software.

In step 102, a new version of the software package is received. It may be received via a network interface or read from a file stored in the computer storage.

In step 103, a second list of licenses is determined by scanning the new version of the software package. Each license in the second list includes a second license file path and a second license text.

Next, in step 104, it is determined whether the first list of licenses includes the second list of licenses. In other words, for each license in the second list, it is determined whether the first list of licences contains a license having the first license file path and the first license text identical to the second license file path and the second license text.

Finally, in step 105, an audit status for the new version of the software package is set, based on a result of the determination performed in step 104.

As a result, the audit status indicates whether licenses inside the software project or package are not changed since the previous licensing audit. Based on the audit status it is possible to decide whether the manual verification of license compliance is required or not.

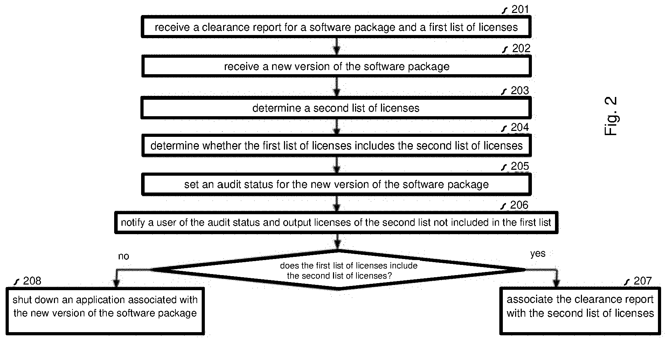

Fig. 2 illustrates a method of software licensing audit, according to another embodiment of the invention. Steps 201-205 are the same as respective steps 101-105 of the method presented in Fig. 1. Next, in step 206, a user is notified of the audit status and the licenses of the second list not included in the first list are outputted. In other words, each license out of the licenses in the second list is outputted, for which the first list of licences does not contain a license having the first license file path and the first license text identical to the second license file path and the second license text. User may be notified by displaying an information on a computer display, or by sending any kind of message via a network interface. The licenses of the second list not included in the first list may be outputted to a computer display or added to the message sent to the user via the network interface. Such output may be helpful for the user, as the manual verification of license compliance may be limited only to the licenses in the second list not included in the first list, and not to all licenses in the second list. In addition, if the first list of licenses include the second list of licenses, it is possible to omit the manual verification of license compliance. Therefore, the entire process of software licensing audit consumes less time.

Subsequently, if the first list of licenses include the second list of licenses, step 207 is performed, otherwise step 208 is performed.

In step 207, the clearance report is associated with the second list of licenses and/or with the new version of the software package.

In step 208, one or more applications associated with the new version of the software package is shut down.

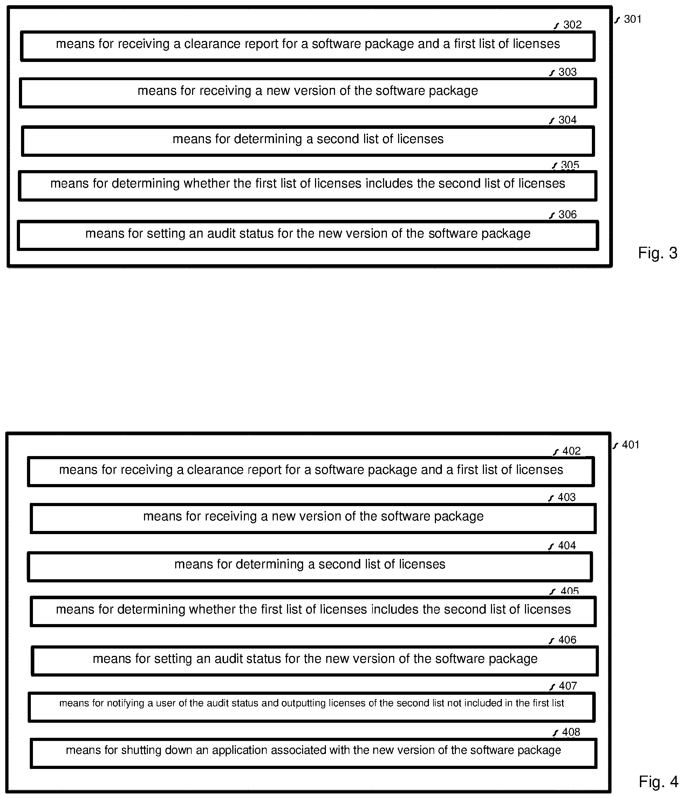

Fig. 3 presents logical components of a system for software licensing audit, according to one embodiment of the invention. The system 301 includes means 302 for receiving a clearance report for a software package and a first list of licenses, means 303 for receiving a new version of the software package, means 304 for determining a second list of licenses, means 305 for determining whether the first list of licenses includes the second list of licenses, and means 306 for setting an audit status for the new version of the software package.

Means 302 is used for receiving a clearance report for a software package and a first list of licenses, via a network interface or from a file stored in the computer storage. Each license in the first list includes a first license file path and a first license text.

Means 303 is used for receiving a new version of the software package, via a network interface or from a file stored in the computer storage.

Means 304 is used for determining a second list of licenses by scanning the new version of the software package. Each license in the second list includes a second license file path and a second license text.

Means 305 is used for determining, for each license in the second list, whether the first list of licences contains a license having the first license file path and the first license text identical to the second license file path and the second license text.

Means 306 is used for setting an audit status for the new version of the software package, based on a result of the determination performed by means 305.

Fig. 4 presents logical components of a system for software licensing audit, according to another embodiment of the invention. The system 401 includes means 402-406 which are the same as respective means 302-206 of the system 301 presented in Fig. 3. In addition, system 401 includes means 407 for notifying a user of the audit status and outputting licenses of the second list not included in the first list and means 408 for shutting down an application associated with the new version of the software package.

Means 407 is used for notifying a user of the audit status and for outputting each license out of the licenses in the second list, for which the first list of licences does not contain a license having the first license file path and the first license text identical to the second license file path and the second license text.

Means 408 is used for shutting down one or more applications associated with the new version of the software package.

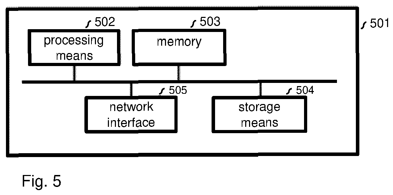

Fig. 5 illustrates the hardware components of a computer being part of the system according to one embodiment of the invention. A computer 501, in the most general form includes a processing means 502, which typically is CPU and/or GPU, a memory 503, which is typically RAM, and a storage means 504, which is typically hard disk. It may also include network interface 505. Computer 501 may be a standalone PC, workstation, server, or a virtual server in a cloud environment.

Although particular embodiments have been disclosed herein in detail, they are done by way of example for purposes of illustration only, and is not intended to be limiting with respect to the scope of the appended claims that follow.

Independent of the grammatical term usage, individuals with male, female or other gender identities are included within the term.

## Claims

1. A method of software licensing audit, comprising:
receiving a clearance report for a software package and a first list of licenses associated with the clearance report, each license comprising a first license file path and a first license text,
receiving a new version of the software package,
determining a second list of licenses by scanning the new version of the software package, each license comprising a second license file path and a second license text,
determining, for each license in the second list, whether the first list of licences contains a license having the first license file path and the first license text identical to the second license file path and the second license text,
setting an audit status for the new version of the software package, based on a result of the determination.

2. The method according to claim 1, further comprising:
notifying a user of the audit status and outputting each license out of the licenses in the second list, for which the first list of licences does not contain a license having the first license file path and the first license text identical to the second license file path and the second license text.

3. The method according to claim 1 or 2, further comprising:
upon determining that, for each license in the second list, the first list of licences contains a license having the first license file path and the first license text identical to the second license file path and the second license text,
ssociating the clearance report with the second list of licenses and/or with the new version of the software package.

4. The method according to claim 1 or 2, further comprising:
upon determining that, for at least one license in the second list, the first list of licences does not contain a license having the first license file path and the first license text identical to the second license file path and the second license text, shutting down an application associated with the new version of the software package.

5. A system for software licensing audit, comprising:
means for receiving a clearance report for a software package and a first list of licenses associated with the clearance report, each license comprising a first license file path and a first license text,
means for receiving a new version of the software package,
means for determining a second list of licenses by scanning the new version of the software package, each license comprising a second license file path and a second license text,
means for determining, for each license in the second list, whether the first list of licences contains a license having the first license file path and the first license text identical to the second license file path and the second license text,
means for setting an audit status for the new version of the software package, based on a result of the determination.

6. The system according to claim 5, further comprising
means for notifying a user of the audit status and for outputting each license out of the licenses in the second list, for which the first list of licences does not contain a license having the first license file path and the first license text identical to the second license file path and the second license text.

7. The system according to claim 5 or 6, further comprising
means for shutting down an application associated with the new version of the software package.

8. A computer program product comprising instructions which, when the program is executed by a computer, cause the computer to carry out the method of any of the claims 1-4.
